(19) Europäisches Patentamt
European Patent Office
Office européen des brevets

(11) Veröffentlichungsnummer: **0 270 638**
**B1**

(12) **EUROPÄISCHE PATENTSCHRIFT**

(45) Veröffentlichungstag der Patentschrift: **09.05.90**

(51) Int. Cl.⁵: **B 09 B 5/00, B 03 B 5/02, B 01 D 11/02**

(21) Anmeldenummer: **87904021.0**

(22) Anmeldetag: **04.06.87**

(86) Internationale Anmeldenummer: **PCT/DE87/00261**

(87) Internationale Veröffentlichungsnummer: **WO 87/07536 17.12.87 Gazette 87/28**

(54) **VERFAHREN UND VORRICHTUNG ZUM ABTRENNEN VON AN SCHÜTTGUT GEBUNDENEN FREMDSTOFFEN.**

(30) Priorität: **12.06.86 DE 3619716**

(43) Veröffentlichungstag der Anmeldung:
**15.06.88 Patentblatt 88/24**

(45) Bekanntmachung des Hinweises auf die Patenterteilung:
**09.05.90 Patentblatt 90/19**

(84) Benannte Vertragsstaaten:
**AT BE CH DE FR GB IT LI LU NL SE**

(56) Entgegenhaltungen:
EP-A-0 161 698
DE-A-2 033 741
GB-A- 945 247
US-A-2 981 414
US-A-3 525 606
US-A-4 278 530
US-A-4 477 357

PT/Civiele Techniek, Band 40, Nr. 9, September 1985, Rijswijk, NL, W. van Gemert et al.: "Reinigingsinstallatie voor vervuilde grond", Seiten 24-29

(73) Patentinhaber: **I.F.S. INGENIEURGESELLSCHAFT FÜR STEUERUNGS- UND SYSTEMTECHNICK MBH**
**Gneisenaustrasse 66**
**D-1000 Berlin 61 (DE)**

(72) Erfinder: **CASTAGNA, Wolfgang**
**Mittenwalder Str. 42**
**D-1000 Berlin 61 (DE)**
Erfinder: **ORTWEIN, Heinz**
**Turmstr. 38**
**D-1000 Berlin 21 (DE)**

(74) Vertreter: **Lüke, Dierck-Wilm, Dipl.-Ing.**
**Gelfertstrasse 56**
**D-1000 Berlin 33 (DE)**

**Beschreibung**

Die Erfindung bezieht sich auf ein Verfahren zum Abtrennen von an Schüttgut gebundenen Fremdstoffen gemäß dem Oberbegriff des Anspruches I.

Es ist bekannt, daß z.B. durch Industrieabfälle Schadstoffe im Boden vorhanden sind, so z.B. P.C.B., Öl und dgl., Derartige Schadstoffe lagern sich an den kleinen und kleinsten Partikeln des Bodens an. Zur Entsorgung der Schadstoffe kann der verunreinigte Boden auf Deponienabgelagert werden. Dies ist jedoch bei großen Mengen unwirtschaftlich. Von daher ist es bekannt, den Boden unter Zusatz von chemischen Waschmitteln zu waschen. Die hierzu benötigten Chemikalien bejasten jedoch ebenfalls die Umwelt, so daß ein Waschverfahren mit derartigen Chemikalien ebenfalls ausscheidet.

Es ist ferner bekannt, daß durch Ablagerungen von Nutzstoffen, wie z.B. Kohle und dgl., Bodenverunreinigungen auftreten. Hierbei können zwar durch Sieben größere Nutzstoffteile aus dem Boden entfernt werden. Auch können durch Waschverfahren feinere Fraktionen der Nutzstoffe aus dem Boden entfernt werden. Die am Boden fester gebundenen Nutzstoffe können jedoch mit bekannten Verfahren nicht mit wirtschaftlich vertretbaren Kosten vom Boden getrennt werden.

Ein Verfahren der gattungsgemäßen Art ist aus der USA—PS 4,278,530 vorbekannt. Bei diesem erfolgt die Erzeugung von Stoßenergie durch rotierende Klingen, die an den Enden einzelner Rührflügel angebracht sind und die mittels einer Zentralwelle rotiert werden. Nachteilig hierbei ist, daß nur das in schlagartige Berührung mit den Klingen kommende Gemenge mit Energiestößen beaufschlagt wird. Diese sind jedoch unter Berücksichtigung der relativ kleinen Flächen der Klingen äußerst gering.

Der Erfindung liegt von daher die Aufgabe zugrunde, ein Verfahren der gattungsgemäßen Art dahingehend weiterzuentwickeln, daß bei geringem Einsatz von Waschmitteln das Schüttgut von den an diesen gebundenen Fremdstoffen unter Einwirkung besonders hoher Energiestöße gereinigt werden kann.

Die Lösung dieser Aufgabe ergibt sich aus den kennzeichnenden Merkmalen des Anspruches 1. Mit dem erfindungsgemäßen Verfahren wird auf das mit Schad- und/oder Nutzstoffen belastete Schüttgut eine besonders hohe Bewegungsenergie aufgebracht, wodurch die Fremdstoffe aus dem Schüttgut unter Einwirkung der hohen Energiestöße herausgetrennt werden. Diese hohen Energiestöße werden durch die im wesentlichen vertikalen Prallwände aufgebracht, die durch einen Linear-Antrieb erzeugt werden, der die Prallwände in stoßartige Hin- und Herbewegung versetzt. Anschließend werden das von den Fremdstoffen getrennte Schüttgut, die Fremdstoffe selbst und die eingesetzten Waschmittel voneinander separiert. Versuche haben gezeigt, daß die Einwirkung hoher Energiestöße, die große Beschleunigungswerte von bis zu 20 g erfordern, eine Abtrennung der an das Schüttgut gebundenen Fremdstoffe bewirken, ohne daß aggressive Waschmittel, insbesondere die Umwelt belastende Chemikalien, eingesetzt werden müssen. Es wurde ein Separierungserfolg von bis zu 100% erzielt, so daß das gereinigte Schüttmaterial völlig frei von Fremdstoffen war. Mit dem erfindungsgemäßen Verfahren ist es somit möglich, unterschiedliche Fraktionen von an das Schüttgut gebundenen Fremdstoffen von dem Schüttgut abzutrennen, insbesondere Schadstoffe, wie P.C.B, Öl und dgl., aber auch Nutzstoffe, wie Kohle und dgl.

In besonders bevorzugter Weise wird das Schüttgut nach einem ersten Verfahrensdurchgang mit Waschmitteln nochmals einem weiteren Verfahrensdurchgang mit reinem Wasser unterworfen, um evtl. noch am Schüttgut anhaftende Fremdstoffe aus dem Schüttgut herauszutrennen.

Es wurde festgestellt, daß Schad- und Nutzstoffe eine hohe Affinität insbesondere zu feinen Bodenpartikeln, wie z.B. Lehm und Mergel, insbesondere Geschiebemergel haben. Die Versuche haben gezeigt, daß eine Lösung der Schad- und Nutzstoffe vom Boden sogar nur unter Zusatz von Wasser dann möglich ist, wenn nur der Energieeintrag, d.h. die auf das Bodenmaterial einwirkenden Energiestöße, ausreichendgroß sind, um die Fremdstoffe herauszulösen.

Beim Behandeln von mit Koks-Kohle-Rückständen verunreinigtem Bodenmaterial wurde sogar eine wirtschaftliche Kohle-Rückgewinnung durch Trennung der Koks-KohleBestandteile von den nicht brennbaren Bestandteilen ermöglicht. Die gewünschte Trennung erfolgte in einem Waschverfahren mit reinem Wasser.

Die erfindungsgemäße Vorrichtung zur Durchführung des Verfahrens ist durch die Verwendung eines rohrförmigen Behälters mit im wesentlichen horizontaler Achse gekennzeichnet, in welchem vertikal angeordnete Prallwände ausgebildet sind. Diese werden mittels eines hin- und hergehenden Linear-Antriebes bewegt, wobei hohe Energiestöße auf das durch den Behälter geförderte und mit dem Waschmittel aufgeschwemmte Schüttgut einwirken. Die Prallwände sind in besonders zweckmäßiger Weise als Förderschnecke im rohrförmigen Behälter ausgeführt, welche mit einem Drehantrieb und dem hin- und hergehenden Linear-Antrieb versehen ist. Die Schnecke kann frei im rohrförmigen Behälter drehbar oder mit diesem festverbunden sein, wobei im letzteren Fall der rohrförmige Behälter selbst drehbar und hin- und herbewegbar gelagert sein muß. Die Drehung erfolgt zum Transport des Gemenges aus Schüttgut und Waschmittel im rohrförmigen Behälter. Die horizontale Hin- und Herbewegung unter Einwirkung hoher Energiestöße dient zur Trennung der Fremdstoffe vom Schüttgut. Dieses kann Bodenmaterial oder Bauschutt oder dgl. sein.

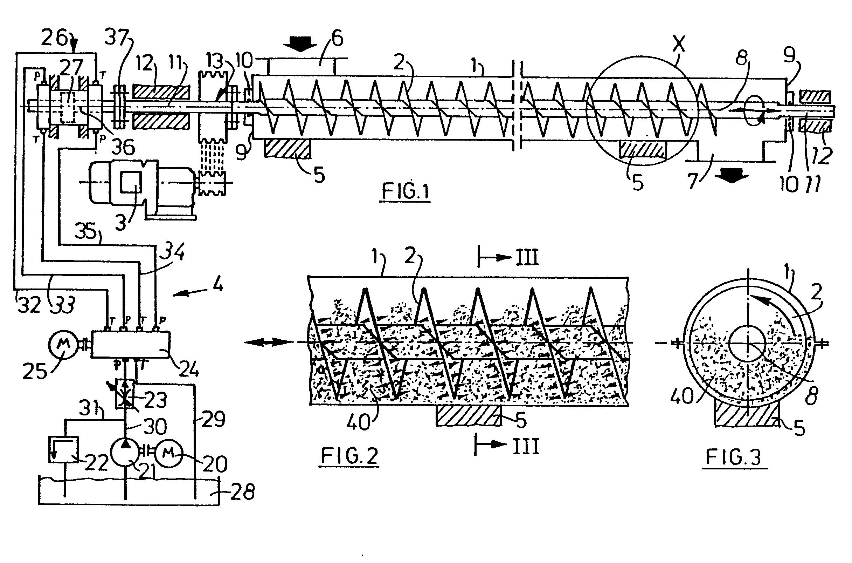

Es ist aus der Fachzeitschrift PT/Civiele Techniek, Bd.40, Nr. 9, September 1985, (Reijswijk, N.L.), Fig. 3, eine mit einer Schnecke versehene Vorrichtung zur Trennung von an Schüttgut gebundenen Fremdstoffen bekannt. Diese Schnecke rotiert jedoch nur, ohne daß diese stoßweise hin- und herbewegt wird. Somit ist mit dieser Vorrichtung keine wirkungsvolle Abtrennung von an Schüttgut gebundenen Fremdstoffen möglich.

Bei Verwendung der erfindungsgemäßen Vorrichtung wird das Schüttgut zusammen mit dem Waschmittel an einem Ende des rohrförmigen Behälters durch eine Einlaßöffnung eingefüllt. Im rohrförmigen Behälter erfolgt dann eine mechanische Abtrennung der Fremdstoffe vom Schüttgut. Aus einer im Endbereich des rohrförmigen Behälters angeordneten Auslaßöffnung werden das Schüttgut, die abgetrennten Fremdstoffe und das Waschmittel abgeführt. In einem nachfolgenden weiteren Verfahrensschritt wird das so behandelte Schüttgut nochmals mit reinem Wasser nachgespült. Diese Behandlung kann auch bei einer im Mittelbereich des Behälters angeordneten, siebartigen Auslaßöffnung für das Waschmittel im weiteren Abschnitt des rohrförmigen Behälters erfolgen, wozu dieser im mittleren Bereich eine weitere Einlaßöffnung für Waschwasser und im Endbereich eine weitere Auslaßöffnung aufweisen muß.

Erfindungswesentlich ist ferner noch die Ausbildung des hin- und hergehenden Linear-Antriebes für die Bewirkung der großen Energiestöße. Hierzu ist erfindungsgemäß eine Hydraulikeinrichtung mit einem Drehkolben-Wegeventil vorgesehen, dessen Drehbewegung und damit die Schaltfrequenz über die Winkelgeschwindigkeit veränderbar ist und durch einen Drehantrieb erzeugt wird. Das Drehkolben-Wegeventil schaltet Druckströme hoher Energiedichte, welche auf die Parallelwände bzw. die Schnecke bzw. die Kombination aus Schnecke und rohrförmigem Behälter einwirken Durch die Möglichkeit der stufenlosen Veränderung von Frequenz und Amplitude kann das zu reinigende Schüttgut materialspezifisch optimal angesprochen werden.

Die Erfindung ist nachfolgend anhand zweier, in den Zeichnungen dargestellter Ausführungsbeispiele von Vorrichtungen zum Abtrennen von an Schüttgut gebundenen Fremdstoffen näher erläutert. Es zeigen:

Fig. 1 einen prinzipiellen Längsschnitt durch die Vorrichtung in der ersten Ausführungsform,

Fig. 2 eine vergrößerte Darstellung des Details X aus Fig. 1,

Fig. 3 einen Schnitt gemäß der Linie III-III in Fig. 2,

Fig. 4 einen prinzipiellen Längsschnitt durch die Vorrichtung in der zweiten Ausführungsform,

Fig. 5 eine vergrößerte Darstellung des Details Y in Fig. 4,

Fig. 6 einen Querschnitt gemäß der Linie VI-VI in Fig. 4,

Fig. 7 einen Teil-Längsschnitt durch ein Drehkolben-Wegeventil eines Liniearantriebes,

Fig. 8 den Drehkolben des Wegeventils gemäß Fig. 7,

Fig. 9 die den Drehkolben aufnehmende Hülse und

Fig. 10 das Außengehäuse des Drehkolben-Wegeventils.

Die erste Ausführungsform der Vorrichtung zum Abtrennen von an Schüttgut gebundenen Fremdstoffen umfaßt einen rohrförmigen Behälter 1, eine Schnecke 2, einen Drehantrieb 3 und einen Linearantrieb 4.

Der rohrförmige Behälter 1 ist drehfest auf Stützlagern 5 gelagert und weist an seinem in Fig. 1 oben links gezeigten Anfang oben eine Einlaßöffnung 6 und an seinem in Fig. 1 rechts gezeigten Ende unten eine Auslaßöffnung 7 auf. Die Achse 8 des Behälters 1 verläuft im wesentlichen horizontal und kann in Richtung auf die Auslaßöffnung 7 leicht geneigt angeordnet sein. In den beiden Stirnwänden 9 des Behälters 1 sind abgedichtete Durchgänge 10 für die Wellenenden 11 der Schnecke 2 ausgebildet. Die Wellenenden 11 sind in ortsfesten Lagern 12 drehbar und zugleich verschiebbar gelagert. Zwischen dem in Fig. 1 links dargestellten Lager 12 und dem Behälter 1 ist ein Riementrieb 13 zum Antrieb der Schnecke 2 mittels des als Elektromotor ausgebildeten Drehantriebes 3 angeordnet.

Der hin- und hergehende Liniearantrieb 4 für die Schnecke 2 umfaßt einen Motor 20, eine Hydraulikpumpe 21 sowie ein Überdruckventil 22, einen Mengenregler 23, ein Drehkolben-Wegeventil 24 mit angeflanschtem Antriebsmotor 25, einen Hydraulik-Zylinder 26 mit Kolben 27, einen Tank 28 für das Druckmedium sowie Rohrleitungen 29 bis 35 zur Verbindung der Bauteile 20 bis 28 untereinander. Die einzelnen Leitungsanschlüsse am Drehkolben-Wegeventil 24 und am Hydraulik-Zylinder 26 sind mit Druckleitung P bzw. Tankleitung T bezeichnet. Der Kolben 27 des doppelt-wirkenden Hydraulik-Zylinders 26 ist mit seiner Kolbenstange 36 über einen Flansch 37 fest mit der Welle 11 der Schnecke 2 verbunden.

Über die Leitung 30 wird mittels der Pumpe 21 das Druckmedium, insbesondere Drucköl, der in Fig. 1 unteren Druckleitung P des Drehkolben-Wegeventiles 24 zugeführt. Gesteuert vom Antriebsmotor 25 wird das Druckmedium durch eine der beiden in Fig. 1 oberen Druckleitungen P, z.B. durch die linke Druckleitung P, 33 der oberen linken Druckleitung P des Hydraulik-Zylinders 26 zugeführt. Bei geschlossener Tankleitung T, 34 erfolgt eine stoßartige Bewegung des Kolbens 27 in Fig. 1 nach rechts, womit gleichzeitig die Schnecke 2 in Fig. 1 nach rechts stoßartig bewegt wird. Beider Bewegung des Kolbens 27 nach rechts ist die Tankleitung T, 32 geöffnet, so daß das Druckmedium aus dem rechts vor dem Kolben 27 befindlichen Druckraum abfließen kann. Anschließend wird das Drehkolben-Wegeventil 24 umgesteuert, so daß die Druckleitung P, 35 mit dem Druckmedium beaufschlagt wird. Bei geschlossener Tankleitung T, 32 erfolgt eine Rückbewegung des Kolbens 27 in Fig. 1 nach links, wobei die Schnecke 2 ebenfalls stoßartig nach links in Fig. 1 bewegt wird. Gleichzeitig ist die Tankleitung T, 34 geöffnet. Diese stoßartige Bewegung der Schnecke 2 erfolgt mit einer Mindestfrequenz von z.B. 25 Hz und einer Mindestamplitude von ca. 10 bis 15 mm bei einem Füllungsgrad von maximal 50% des Behälters 1 und einem Verhältnis von Schüttgut zu Waschmittel von z.B. 1:5. Die Einwirkzeit auf das im Behälter 1 befindliche Schüttgut soll ca. 5 min betragen. Diese Daten sind abhängig vom zu behandelnden Schüttgut, hier Bodenmaterial. Die Wirkung der stoßartigen Hin- und Herbewegung der Schnecke 2 auf das im Behälter 1 befindliche Gemenge 40 aus Schüttgut und daran gebundenen Fremdstoffen ist in Fig. 2 dargestellt. Durch die stoßartige Hinund Herbewegung der Schnecke 2 wirken deren einzelne Wendel als Prallplatten, welche den mit Pfeilen dargestellten Stoßeffekt auf das mit Fremdstoffen belastete Schüttgut ausüben, um so die Fremdstoffe vom Schüttgut abzutrennen.

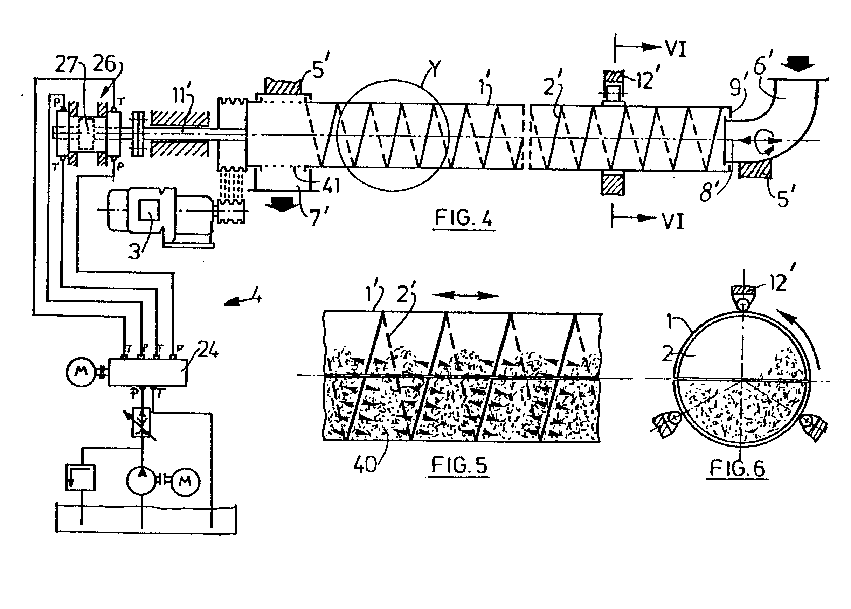

Bei der in den Figuren 4 bis 6 dargestellten zweiten Ausführungsform der Vorrichtung zum Abtrennen von an Schüttgut, z.B. Boden, gebundenen Fremdstoffen sind der Drehantrieb 3 mit Riementrieb, der hin- und hergehende Liniearantrieb 4 mit Drehkolben-Wegeventil 24 und Hydraulik-Zylinder 26 mit Kolben 27 sowie die in Fig. 4 linksseitig dargestellte Gleit-Dreh-Lagerung in gleicher Weise vorhanden wie beim ersten Ausführungsbeispiel gemäß den Figuren 1 bis 3. Im Unterschied hierzu ist die Schnecke 2' im rohrförmigen Behälter 1' fest angebracht, wobei die äußeren Umfangsflächen der Schnecke 2' fest mit der Behälterwandung verbunden sind, wie es auch in Fig. 5 dargestellt ist. Der Behälter 1' ist über die linksseitige Welle 11' sowie eine Dreipunktlagerung 12' rechtsseitig drehbar und hin- und herbewegbar gelagert. Die Einlaßöffnung 6' ist am in Fig. 4 rechts dargestellten Ende des Behälters 1 vorgesehen und mündet abgedichtet in die rechte Stirnseite 9' des Behälters 1'. Die Auslaßöffnung 7' ist in Fig. 4 am linken Ende des Behälters 1' angeordnet, dessen Achse 8' etwas in Richtung auf die Auslaßöffnung 7' geneigt sein kann. Die Auslaßöffnung 7' umgibt den rohrförmigen Behälter 1' allseitig in Form einer nach unten offenen Auffangwanne. Der Behälter 1' ist im Bereich der wannenartigen Auslaßöffnung 7' mit um seinen Umfang verteilt angeordneten Auslaßöffnungen 41 versehen, wobei die Stabilität des Behälters 1' auch in diesem Bereich gewährleistet ist.

Im Gegensatz zum Ausführungsbeispiel gemäß den Figuren 1 bis 3 wird der Behälter 1' gemäß dem zweiten Ausführungsbeispiel nach den Figuren 4 bis 6 zusammen mit der in diesem fest angebrachten Schnecke 2' stoßartig hin- und herbewegt und gleichzeitig gedreht, wobei die Linearbewegung durch den Linearantrieb 4 und die Drehbewegung durch den Drehantrieb 3 erfolgen. Die Wirkung der einzelnen Wendeln der Schnecke 2' als Prallplatten ist in Fig. 5 durch Pfeile dargestellt.

In einer Ausführungsform beträgt der Durchmesser des rohrförmigen Behälters 0,80 m, die Länge des Behälters 1 beträgt etwa 3,50 m, so daß eine Durchsatzleistung von etwa 7 t/h Schüttgut erreicht werden kann. In der Ausführungsform gemäß den Figuren 1 bis 3 beträgt der Abstand der Wendeln zueinander in axialer Richtung, als Steigung bezeichnet, etwa 0,10 m.

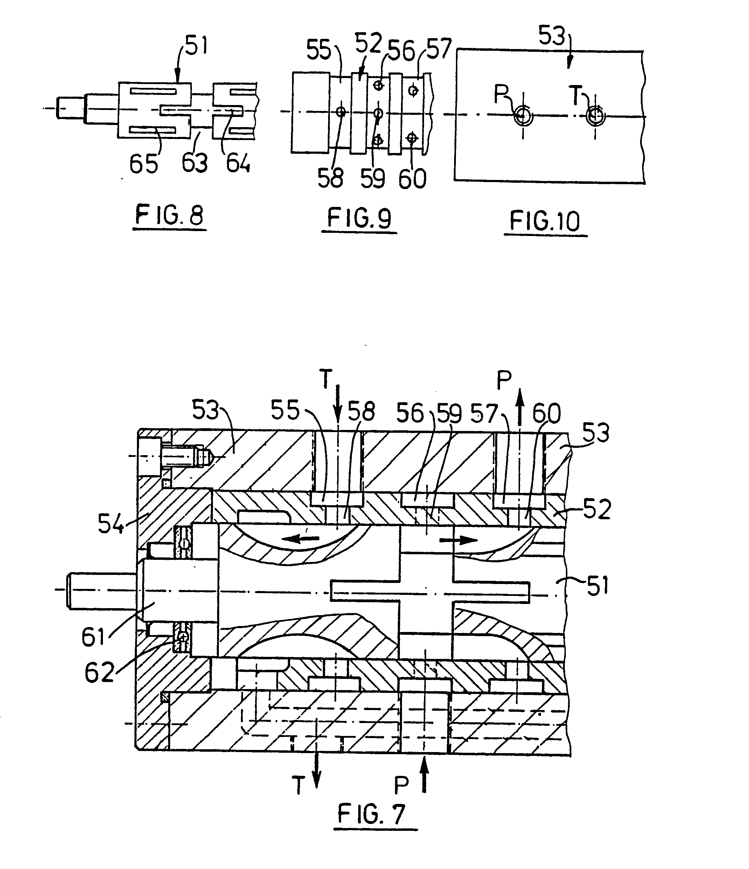

Das in der Fig. 7 in einem Teil-Längsschnitt und in den Fig. 8 bis 10 mit seinen einzelnen Bauteilen dargestellte Drehkolben-Wegeventil 24 umfaßt einen Drehkolben 51 (Fig. 8), eine Innenhülse 52 (Fig. 9) und ein äußeres Gehäuse 53 (Fig. 10) sowie an beiden Enden des Gehäuses 53 mit diesem abgedichtet verschraubte Stirnflansche 54 (Fig. 7). Das Gehäuse 53 umfaßt Druckleitungsanschlüsse P und Tankleitungsanschlüsse T, welche jeweils in umlaufende Nuten 55 bis 57 am Außenumfang der Innenhülse 52 münden. Diese Nuten 55 bis 57 sind über Bohrungen 58 bis 60 mit dem Innenraum der Innenhülse 52 verbunden. In dieser ist der Drehkolben 51 gelagert, dessen stirnseitiger-Wellenzapfen 61 in dem Stirnflansch 54 über ein Achsialwälzlager 62 gelagert ist. Der Drehkolben 51 umfaßt umlaufende Nuten 63 mit von diesen axial ausgehenden Schlitzen 64 sowie weitere Schlitze 65 in seinen Mantelflächen beidseits der Nuten 63. Durch taktweises Drehen des Drehkolbens 51 können die einzelnen Steuerstellungen des Drehkolben-Wegeventiles 24 eingestellt werden, welche bei der Beschreibung des Linearantriebes 4 näher abgehandelt worden und in Fig. 7 mit Pfeilen dargestellt sind. Der Drehkolben 51 ist hydrostatisch in der Innenhülse 52 gelagert. Das Drehen des Drehkolbens 51 kann auch kontinuierlich erfolgen.

## Patentansprüche

1. Verfahren zum Abtrennen von an Schüttgut gebundenen Fremdstoffen, insbesondere Schadstoffen, z.B. PCB, Öl und dergleichen, und Nutzstoffen, z.B. Kohle und dergleichen, wobei das Bodenmaterial mit Waschmitteln, z.B. Wasser, Tensiden und dergleichen, vermengt und mechanisch bewegt wird, das Gemenge aus Schüttgut und Waschmitteln einer starken Bewegungsenergie ausgesetzt wird, welche die Fremdstoffe aus dem Schüttgut unter Einwirkung von Stoßenergie heraustrennt und anschließend eine Separierung von Schüttgut, Fremdstoffen und Waschmitteln durchgeführt wird, dadurch gekennzeichnet,

daß das Gemenge einem rohrförmigen Behälter (1, 1') mit im wesentlichen horizontaler Achse (8, 8') durch eine am Anfang des Behälters befindliche obere Einlaßöffnung (6, 6') zugeführt wird,

daß das Gemenge mittels im wesentlichen vertikaler Prallwände, die durch einen Linear-Antrieb (4) hin- und herbewegt werden, in stoßartige Hin- und Herbewegung innerhalb des Behälters gebracht wird und daß das separierte Gemenge anschließend durch eine untere Auslaßöffnung (7, 7') am Ende des Behälters ausgegeben wird.

2. Verfahren nach Anspruch 1, dadurch gekennzeichnet, daß das Schüttgut mit eventuell noch anhaftenden Fremdstoffen einem weiteren Waschprozess mit Wasser unterworfen wird.

3. Vorrichtung zur Durchführung des Verfahrens nach Anspruch 1 oder 2, dadurch gekennzeichnet, daß innerhalb eines rohrförmigen Behälters (1, 1') mit im wesentlichen horizontaler Achse (8, 8') im wesentlichen vertikale Prallwände angeordnet sind, daß der Behälter (1, 1') mit einer oberen Einlaßöffnung (6, 6') am Anfang und mit einer unteren Auslaßöffnung (7, 7') im Endbereich versehen ist, und daß ein Linear-Antrieb (4) für die Parallwände vorgesehen ist, der eine stoßartige Hin- und Herbewegung auf die Prallwände ausübt.

4. Vorrichtung nach Anspruch 3, dadurch gekennzeichnet, daß die Prallwände als innerhalb des rohrförmigen Behälters (1) drehbare und mittels des Linear-Antriebes (4) stoßartig hin- und herbewegbare Schnecke (2) ausgebildet sind.

5. Vorrichtung nach Anspruch 3, dadurch gekennzeichnet, daß der rohrförmige Behälter (1') mit der Schnecke (2') fest verbunden und zusammen mit dieser vom Linear-Antrieb (4) stoßweise hin- und herbewegbar und vom Drehantrieb (3) drehbar ist.

6. Vorrichtung nach einem der Ansprüche 3 bis 5, dadurch gekennzeichnet, daß als Linear-Antrieb (4) für die Prallwände eine Hydraulik-Einrichtung mit einem Drehkolben-Wegeventil (24) vorgesehen ist, dessen Drehbewegung und damit die Schaltfrequenz über die Winkelgeschwindigkeit veränderbar ist und durch einen Antriebsmotor (25) erzeugt wird.

## Revendications

1. Procédé pour séparer des corps étrangers liés à des produits en vrac en particulier produits polluants, p. ex. biphénylène surchloré huile et semblables et produits utiles p.ex. charbon et semblables la matière du sol étant mélangée avec des agents de lavage p.ex. eau dérivés tensioactifs et semblables et étant agitée mécaniquement, le mélange étant exposé à une énergie de mouvement forte, qui sépare les corps étrangers des produits en vrac sous l'action d'une énergie de choc, et puis une séparation des produits en vrac, des corps étrangers et des agents de lavage étant effectuée,

caractérisé en ce que le mélange est alimenté à un conteneur tubulaire (1, 1') avec un axe (8, 8') sensiblement horizontal à travers d'une ouverture d'entrée supérieure (6, 6') agencée au commencement du conteneur, que le mélange est mis en un mouvement de va-et-vient violent à l'intérieur du conteneur au moyen de parois de rebondissement sensiblement verticales actionnées d'un mouvement alternatif par un mécanisme d'entraînement linéaire (4), et

que le mélange séparé est puis fait sortir à travers d'une ouverture de sortie inférieure (7, 7') à la fin du conteneur.

2. Procédé selon la revendication 1, caractérisé en ce que les produits en vrac avec des corps étrangers qui adhèrent peut-être encore sont soumis à un autre procédé de lavage avec eau.

3. Dispositif pour la mise en oeuvre du procédé selon la revendication 1 ou 2, caractérisé en ce qu'à l'intérieur d'un conteneur tubulaire (1, 1') avec un axe (8, 8') sensiblement horizontal, des parois de rebondissement sensiblement verticales sont agencées, que le conteneur (1, 1') est pourvu d'une ouverture d'entrée supérieure (6, 6') à son commencement et d'une ouverture de sortie à sa zone finale, et qu'un mécanisme d'entraînement linéaire (4) est prévu pour les parois de rebondissement, qui exerce un mouvement de va-et-vient aux parois de rebondissement.

4. Dispositif selon la revendication 3, caractérisé en ce que les parois de rebondissement sont réalisées sous la forme d'une vis sans fin (2) rotative à l'intérieur du conteneur tubulaire (1) et actionnée d'un mouvement alternatif pas saccades au moyen du mécanisme de mouvement linéaire (4).

5. Dispositif selon la revendication 3, caractérisé en ce que le conteneur tubulaire (1') est solidaire de la vis sans fin (2'), qu'il peut être actionné avec celle-ci d'un mouvement alternatif par saccades par le mécanisme d'entraînement linéaire (4) et qu'il peut être tourné par le mécanisme d'entraînement rotatif (3).

6. Dispositif selon une des revendications 3 à 5, caractérisé en ce que comme mécanisme d'entraînement linéaire (4) pour les parois de rebondissement, un dispositif hydraulique avec un distributeur à piston rotatif (24) est prévu, le mouvement rotatif de celui-ci et donc la fréquence de commutation étant variable par l'intermédiaire de la vitesse angulaire et étant généré par un moteur d'entraiînement (25).

## Claims

1. A process for separating extraneous matter bound to bulk material, in particular pollutant matter, e.g. PCB, oil and the like, and useful matter, e.g. coal and the like, the soil matter being mixed with washing agents, e.g. water, tensides and the like, and being mechanically moved, the mixture of bulk material and washing agents being exposed to a heavy motional energy separating the extraneous matter from the bulk material under the action of shock energy, and subsequently a separation of bulk material, extraneous matter and washing agents being performed,

characterised by that the mixture is supplied to a tubular container (1, 1') having a substantially horizontal axis (8, 8') through an upper inlet opening (6, 6') disposed at the beginning of the container,

that the mixture is set to shock-type reciprocating motion inside the container by means of substantially vertical baffle walls being reciprocated by a linear drive (4), and that the separated mixture is then discharged through a lower outlet opening (7, 7') at the end of the container.

2. A process according to claim 1, characterised by that the bulk material with possibly still present extraneous matter is subjected to another washing process with water.

3. A device for carrying-out the process according to claim 1 or 2, characterised by that inside a tubular container (1, 1') with substantially horizontal axis (8, 8') are arranged substantially vertical baffle walls, that the container (1, 1') is provided with an upper inlet opening (6, 6') at the beginning and with a lower outlet opening (7, 7') in its end portion, and that a linear drive (4) for the baffle walls is provided, said linear drive exerting a shock-type reciprocating motion on the baffle walls.

4. A device according to claim 3, characterised by that the baffle walls are formed as a worm (2) rotatable inside the tubular container (1) and reciprocating in shock-type manner by the action of the linear drive (4).

5. A device according to claim 3, characterised by that the tubular container (1') is rigidly connected to the worn (2'), and is reciprocating in shock-type manner together with the latter by the action of the linear drive (4) and is rotatable by the action of the rotary drive (3).

6. A device according to one of claims 3 to 5, characterised by that as linear drive (4) for the baffle walls, a hydraulic apparatus with a rotary piston valve (24) is provided, the rotary motion of which and thus the switching frequency is variable over the rotational speed, and is generated by a drive motor (25).

FIG.1

FIG.2

FIG.3

EP 0 270 638 B1

FIG. 4

FIG. 5

FIG. 6

51

55  52 56  57

53

65  63  64

58  59  60

P  T

FIG. 8

FIG.9

FIG.10

T  P

53  55  58  56 59 57  60  53

54  52

51

61

62

T  P

FIG. 7